# EUROPEAN PATENT SPECIFICATION

(11) **EP 1 552 124 B1**
(45) Date of publication and mention of the grant of the patent: **24.05.2006**
(21) Application number: 03758662.5
(22) Date of filing: 19.09.2003
(51) Int. Cl.: F02B 55/14, F01C 1/22

(54) **ROTARY MACHINE HAVING TWO ROTORS**
ROTATIONSMASCHINE MIT ZWEI ROTOREN
MACHINE ROTATIVE POSSEDANT DEUX ROTORS

(30) Priority: 19.06.2003 IT TV20030089
(43) Date of publication of application: 13.07.2005
(73) Proprietor: Canal, Orlando, Guarapari ES (BR)
(72) Inventor: Canal, Orlando, Guarapari ES (BR)
(74) Representative: Agostini, Agostino
(86) International application number: PCT/IT2003/000559
(87) International publication number: WO 2004/111408

(56) References cited:
- EP-A- 0 668 444
- DE-A- 3 517 552
- FR-A- 2 719 874
- GB-A- 952 765
- US-A- 3 945 220
- US-A- 3 985 476
- US-A- 4 137 019
- PATENT ABSTRACTS OF JAPAN vol. 011, no. 028 (M-557), 27 January 1987 (1987-01-27) & JP 61 200304 A (ASAHI MALLEABLE IRON CO LTD), 4 September 1986 (1986-09-04)

## Description

The present invention refers to the mechanism of a rotary internal-combustion engine.

Engines of this kind are otherwise referred to by the generally known name of Wankel engines. A Wankel engine does completely away with the classical connecting rod-piston crank mechanisms that are generally to be found in internal-combustion engines to convert the reciprocating motion of the piston into the rotary motion of the driving shaft, i.e. the crankshaft. The main component parts making up the structure of the Wankel engine usually include a prism-shaped rotary member having convex-sided triangular bases (i.e. the so-called Reuleaux triangle), which is generally referred to as the rotor, and a stationary member, i.e. the stator, which contains the rotor. On a first base thereof, the rotor has in turn a ring gear disposed concentrically to the axis thereof, wherein a pinion fixed on to the stator meshes with the teeth of such a gear. This constraint determines the trajectory of the rotor within the stator. A round-eccentric driving shaft is coupled with the second base of the rotor. The stator has such a section as to ensure that no separation of the wall of said stator from the vertices of the rotor can ever take place at any moment whatsoever. Such section takes generally the shape of an epitrochoid. By virtue of the combustion of the air-fuel mixture, the rotor is driven rotatably within the stator and, via the eccentric, transfers its rotary motion to the driving shaft. The equivalent of the combustion chamber provided between piston and cylinder in a standard reciprocating engine is formed, in a rotary engine, by the volumes that are enclosed between the sides of the rotor and the inner surfaces of the stator. Owing to the particular geometry of both rotor and stator, the rotary motion of the rotor causes these volumes to change cyclically. While so moving within the stator, the rotor then triggers and defines the various intake, combustion, expansion and exhaust phases of the engine, while at the same time also acting as the timing member. As a matter of fact, neither valves nor timing gearing or linkage are to be found in a Wankel engine, actually. In view of improving combustion characteristics, on the sides of the rotor there are sometimes provided appropriate shallow cavities, in which most of the mixture to be ignited is then able to be held. The kinematical link of the rotor with the driving shaft is such that the latter is generally able to perform three turns per each revolution of the rotor. Known in the art are finally engines provided with more than a single rotor.

Nevertheless, the diffusion of this kind of engines - for example, as disclosed in US Patent no. 2,988,065 - has taken place to a quite negligible extent hitherto, owing mainly to following drawbacks, which have not up to now been able to be satisfactorily done away with through a construction that would actually prove fundionally efficient and economically fitting and viable. Although a Wankel engine allows for the combustion of the air-fuel mixture to be used to an efficiency extent that is more or less equal to that of a reciprocating piston engine (the driving shaft rotates by approximately 180° in both cases during this phase), the problem created by the vibrations being generated by reciprocatingly moving masses to be eliminated, the unbalance forces acting on the driving shaft to be reduced, as well as a simple overall construction to be achieved along with a limited weight thanks to the smaller number of parts required, its actual drawbacks are manifold. As already stated above, the combustion chamber that is formed in the Wankel engine is defined by the sides of the rotor and the inner surface of the stator. It turns out to be long and narrow in its shape, and therefore to have an unfavourable volume-to-surface ratio, which implies greater heat losses and acts against an optimal flame propagation, so that the time required for all of the mixture to burn is relatively long. This problem becomes more marked in the case of big engine sizes, owing to the size of the chamber increasing proportionally. Additionally, the burnt mixture in traditional Wankel engines is exhausted upon the driving shaft having completed a rotation of approximately 180° (60° on the rotor), with just a small arm of the motive force and for a very short period of time. These particular drawbacks are conducive to a greater fuel usage by the engine, owing to the unfavourable heat efficiency and the poorer utilization of the combustion energy. Furthermore, a lower overall efficiency is achieved, owing to a compression ratio that usually lies at values of approximately 7. Finally, the non-optimal combustion conditions generate a more marked air polluting effect.

Now, the above-described drawbacks of Wankel engines cannot be eliminated if traditional construction solutions keep being stuck by. For example, for the compression ratio to be able to be improved, the need would arise for the volume of the combustion chamber to be reduced. However, such a reduction would imply the same combustion chamber to become still narrower, so that the problem connected to the unfavourable volume-to surface ratio would be aggravated. As far as the exhaust angle is on the contrary concerned, the same is determined by the inherent geometry of the system and, therefore, can be modified only marginally, i.e. to a quite small extent. Various solutions have anyhow been proposed in view of doing away with these drawbacks. These include:
- the use of two spark plugs controlled in such a manner as to ensure that the respective sparks go off with a certain phase shift, for instance as shown in the US Patent No. 3,982,502;
- the adoption of a precombustion or pre-ignition chamber on the outside of the stator and connected with the same stator via at least two ports situated on opposite sides relative of the smallest-diameter point of the trochoidal surface, such as this is shown for instance in the US Patent No. 3,391,677;
- a combination of the above-described solutions, such as disclosed in the US Patent No. 4,096,828;
- the use of combustion chambers that are provided, at least partially, also in the rotor, such as disclosed for instance in the US Patent No. 3,387,595.

**The Japanese patent application n° 60040394 and the patent FR 2 719 874 are also known.**

Even these solutions, however, have hitherto failed to prove very successful, owing basically to the fact that the greater construction complexity involved failed to be compensated for by an adequate improvement in performances.

It therefore is actually a main object of the present invention to improve the operation and the efficiency, as well as to reduce the polluting effect of a rotary machine, while being at the same time able to also make use of the diesel cycle.

Within this main object, a further purpose of the present invention is to provide an engine and a compressor, which make use of the construction characteristics of said rotary machine.

According to the present invention, these aims are reached in a rotary machine, as well as an engine and a compressor, incorporating the characteristics as recited in the appended claims.

In particular, in a preferred embodiment thereof as described below, the invention has a configuration of the rotor/driving shaft axis/stator assembly, in which:
- the rotor has an outer contour in the shape of a first equilateral triangle with convex sides, and has therewithin a cavity provided with three lobes, which are referred to as female lobes herein and are arranged according to the vertices of a second equilateral triangle provided concentrically with the first equilateral triangle and rotated by 60° relative thereto. Each cavity communicates with the outside of the rotor via a chamber provided in the rotor itself;
- onto the driving shaft there is eccentrically attached a second rotor, contained in the first rotor, the extremities of which are in a shape that is complementary to the shape of a female lobe;
- the stator has an inner section that is constituted by two juxtaposed arcs of a circumference joined to each other by arcs having a smaller radius of curvature.

Furthermore, a preferred embodiment of the present invention includes, in a manner that is known as such in the art, the provision in the stator of at least two injectors adapted to work in a sequence, the second one of which - as this shall be described in greater detail further on - is aimed at ensuring a more smooth, gradually occurring motion of the rotor.

The construction of the rotary machine according to the present invention anyway enables following features to be achieved:
- the combustion takes place in a chamber that has a high volume-to-surface ratio, i.e. a chamber that, in the case in point, is almost cylindrical;
- the burnt mixture is allowed to expand for a longer time and, as a result, to perform a useful work on the driving shaft for a corresponding longer time, hence the uniformity in the torque delivery and the high efficiency;
- the designer has the possibility to alter, i.e. to scale at will the shape of the rotary machine in view of achieving the desired power rating.

Anyway, these and other features, along with the advantages deriving therefrom, will be more readily understood from the description of the construction and operation of a preferred, although not sole embodiment of the present invention, which is given below by way of non-limiting example with reference to the accompanying drawings, in which:
- Fig.1 is a vertical cross-sectional view of the assembly formed by the first and the second rotor, the driving shaft and the stator along a section line indicated at F in Fig.2;
- Fig.2 is a vertical cross-sectional view of the assembly formed by the first and the second rotor, the driving shaft and the stator along a vertical plane passing through the axis of the driving shaft;
- Fig.3a s a vertical cross-sectional view of the stator along the line of section of Fig.1;
- Fig.3b is a schematical, cross-sectional geometric representation of the stator, as considered helpful in defining the construction thereof;
- Fig.4a is a cross-sectional view of the rotor along a vertical sectional plane extending orthogonally to the axis of rotation thereof, so as to better illustrate the cavities and the conduits inside the rotor;
- Fig.4b is a schematical, cross-sectional geometric representation of the rotor, as considered helpful in defining the construction thereof;
- Fig.5a is a cross-sectional view of the second rotor along a vertical sectional plane extending orthogonally to the axis of rotation thereof, so as to better illustrate the conduits inside the second rotor;
- Fig.5b is a schematical, cross-sectional geometric representation of the second rotor, as considered helpful in defining the construction thereof;
- Figures 6 to 15 are respective views of the mutual arrangement of rotor and lobe inside the stator during each thermodynamic phase of the engine cycle;
- Fig.16 is a cross-sectional view along a vertical plane extending perpendicularly to the axis of the driving shaft of a compressor that uses a similar mechanical construction as the engine according to the present invention;
- Fig.17 is a view showing a detail of a side of the rotor belonging to the compressor shown in Fig.16; and
- Figures 18 to 21 are respective views of the phases of the intake and delivery cycle of the compressor shown in Fig.16.

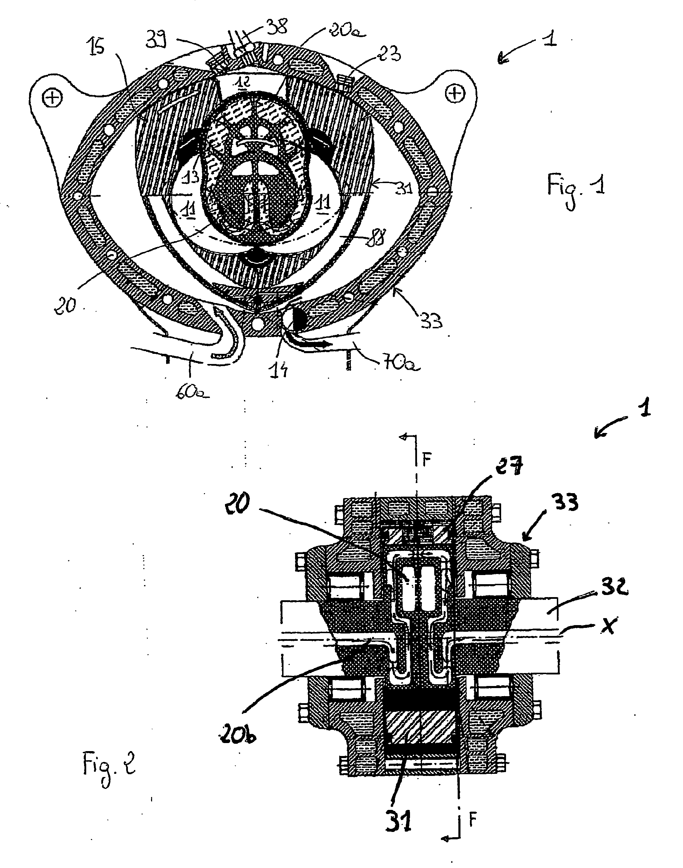

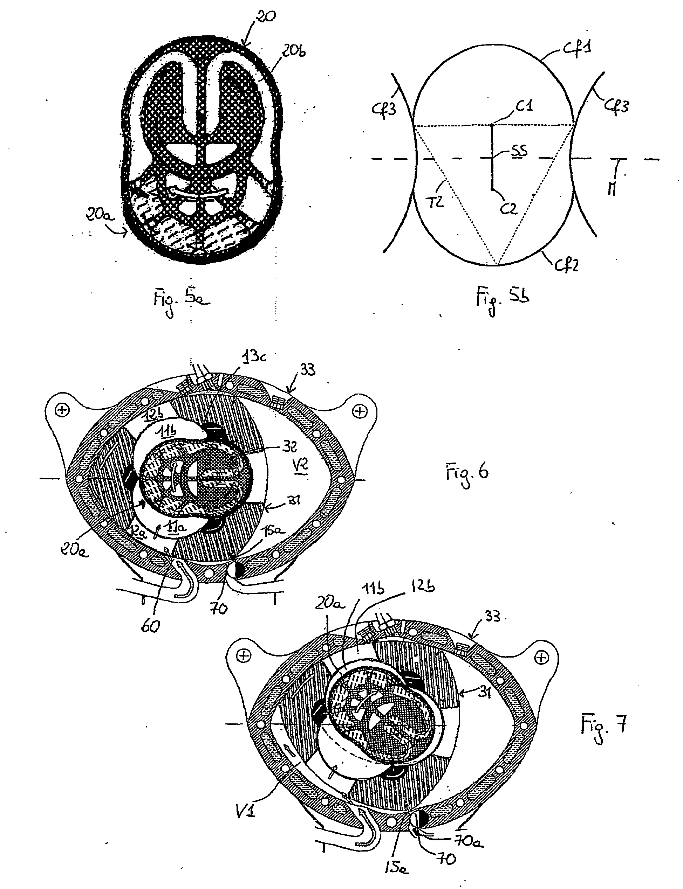

Figures 1 and 2 illustrate, as generally indicated at 1, an exemplary embodiment of a rotary machine incorporating the solutions and features according to the present invention. This rotary machine comprises a stationary member 33 (Figures 1 and 3a), which is generally referred to as the stator, within which (see Figures 1 and 4a) there is contained a rotating member 31, which is generally referred to as the rotor. Coaxially with the rotor 31 there is provided a driving shaft 32, on which there is eccentrically secured a second rotor 20 (see Fig.5a).

When observed in its vertical cross-section, the rotor 31 shows an outer contour in the shape of an equilateral triangle T01 having convex sides. At the vertices of this triangle T01 there are provided, using techniques that are known as such in the art, sealing means that are indicated at 15a, 15b and 15c in the Figures. Inside said rotor there is provided a regular three-lobe cavity 11, the lobes 11a, 11b and 11c of which shall from now on be referred to as female lobes.

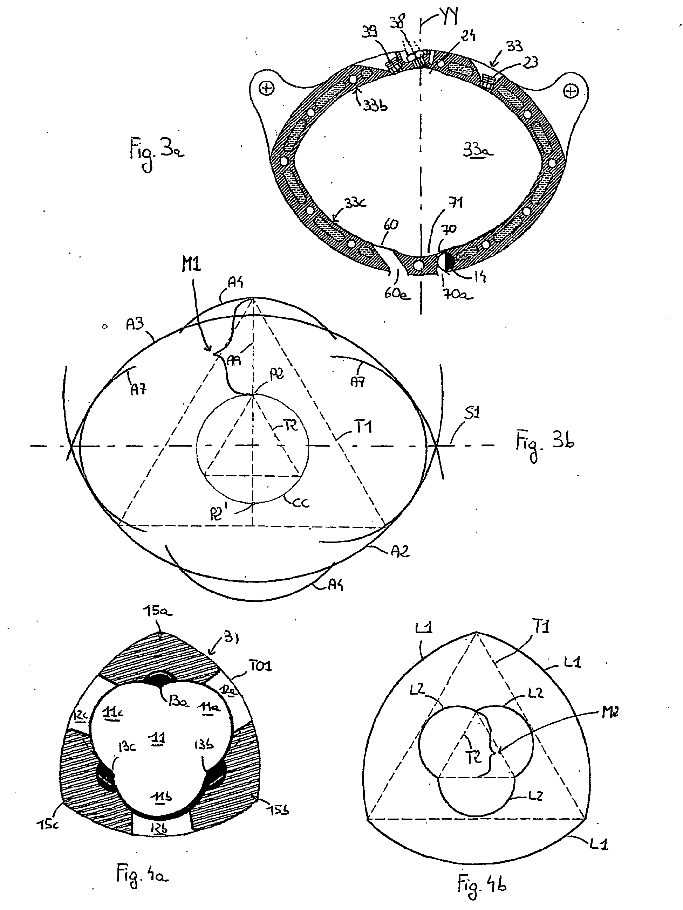

With reference to Fig.4, the indications are set forth to geometrically describe and draw out the rotor 31 and the three lobes 11a, 11b and 11c of the cavity 11. Calling T1 an equilateral triangle, let a second triangle T2 contained in T1, and having its barycentre coinciding with the one of T1 and its sides parallel to the ones of T1, be considered. Let now a compass be pointed from a vertex of T2 at one of the farthest vertices of T1 and let an arc L1 to be drawn which joins said two vertices with each other. The arc that is obtained in this way is a convex side of the rotor 31. By going through this same procedure for all of the three vertices of T2, the outer contour of the rotor 31 is eventually obtained.

Let us now draw out a semi-circumference L2 externally with respect to T2, having a diameter that is equal to the same side of T2, and having extremities that coincide with the extremities of the considered side of T2. Repeating the same procedure for all of the three sides of T2, three semi-circumferences L2 are eventually obtained, which constitute the perimeter of the cavity 11; the rotor 31 turns in this way out as being formed by three identical sectors.

The above-mentioned female lobes 11a, 11b and 11c geometrically define three cusps, in correspondence of which there are provided, with techniques that are known as such in the art, sealing means 13a, 13b and 13c, respectively. The female lobes 11a, 11b and 11c are communicating with the outer contour of the rotor 31 via three chambers 12a, 12b and 12c, respectively, which are substantially oval and elongated in their cross-section. Clearly, the shape of these chambers may change, by for instance showing a greater or smaller eccentricity of the oval or by taking the shape of a mixtilinear rectangle. As best illustrated in Fig.4a, these chambers are provided on the summit of said three lobes 11a, 11b and 11c.

No strict rule is given as far as the sizing of the female lobes 11a, 11b and 11c (i.e. the size of the triangle T2 inside the triangle T1 in Fig.4b) is concerned, since these sizes should rather be considered and assessed in each single case, i.e. depending on each single case. However, it should be noticed that there exist definite lowest and highest allowable values. The highest allowable value is determined by the smallest desired size of the chambers 12a, 12b and 12b (the larger the size of the female lobe, the smaller the volume remaining for said chambers), whereas the lowest value is determined by the amount of stress which the driving shaft is actually capable of withstanding (the smaller the female lobe, the smaller the size of the second rotor attached on to the driving shaft 32 and, as a result, the smaller the diameter of the driving shaft 32).

For the geometrical indications given in connection with the sizing and the configuration of the second rotor 20 to be more clearly understood, reference should be made to Fig.5b. The indications that are given here, as well as in the geometrical descriptions that will follow further on, shall not be understood as representing a strictly applying, rigorous rule, but rather a general, broadly applying one, which therefore is subject to finer adjustments that prove absolutely necessary at both an experimental and design level, when a number of further factors, such as machining and manufacturing tolerances, thermal expansion and the like, need to be duly taken into account.

Anyhow, let a segment SS be considered, whose extremities are indicated at C1 and C2. Let now two semi-circumferences Cf1, Cf2 be drawn out with centres C1 and C2, respectively, so that the extremities of these semi-circumferences come to lie on a straight line extending perpendicularly to said segment SS, said semi-circumferences have a diameter corresponding to the sides of the triangle T2, as already defined with reference to Fig.4b, and the distance of the centre of these semi-circumferences to the furthermost point of the other semi-circumference is equal to the height of the triangle T2, having a length defined as M2. Said semi-circumferences Cf1, Cf2 are then joined to each other by two similar arcs having a circumference Cf3, with the convexity thereof facing the segment SS, each one of said arcs being obtained by setting a compass, with a spread M2 of the compass-legs, at a first point on the median M of the centres C1, C2, and at a second point on one of the two closest extremities of Cf1 or Cf2.

As already stated above, this is just a broadly applying indication. The radius of the arcs Cf3 and the point on the median M shall be found out so as to avoid forming cusps in the outer contours of the second rotor 20.

Securing the second rotor 20 on to the driving shaft 32 is performed so as to ensure that the axis X of the driving shaft 32 passes through one of the centres C1, C2 shown in Fig.5b. It ensues that an end portion of the rotor 20 protrudes from the driving shaft 32; this protruding end portion is indicated at 20a in the Figures and shall from now on be referred to as male lobe. The second rotor 20, as this shall be described in greater detail further on, turns out to be fully contained within the cavity 11 of the rotor 31. As a result, it is necessary for the radiuses of the semi-circumferences Cf1, Cf2 to be substantially equal to the radiuses of the female lobes 11a, 11b and 11c, and for the distance M2 of the centre of a semi-circumference to the furthermost point of the other semi-circumference to be substantially equal to the distance existing from the axis X of the driving shaft 32 and a sealing means 13a, 13b, 13c. This consideration shall be seen at the light of the possible machining or manufacturing tolerances.

Usually, conduits 20b and/or labyrinths, in which cooling and/or lubricating media are intended to flow, are provided inside the above-mentioned second rotor 20.

Along the borders of the two bases of the rotor 31 there are provided guiding means 88, in which there are able to slide rollers 27 that are attached to the stator (Fig.2) and are generally associated to a spring to dampen vibrations. The combined provision of said rollers and related guides enables the vibrations of the rotor to be dampened, thereby stabilizing the whole engine. Said guides 88 are a feature of the present invention and have two peculiar advantages. They in fact replace the ring gear/pinion assembly of the traditional Wankel engine design, by guiding the rotor 31 in the rotary trajectory thereof within the stator 33; furthermore, they are effective in preventing the rotor 31 from rubbing against the surface of the stator 33. In fact, sealing means (not shown) are provided according to the present invention along the periphery of the bases of the rotor 31 in contact with the stator 33.

The stator 33 (Fig.3a) has an inner cavity 33a in contact with the rotor 31. The upper stator surface 33b, in correspondence of the vertical axis of symmetry YY of the stator 33, shows a recess that constitutes a primary combustion chamber 24, into which there is debouching a first injector 39. This combustion chamber is needed owing to reasons of system's geometry, since it proves absolutely necessary in view of allowing for the motion of the rotor 31 in the stator 33, which, instead of being a simple rotary motion as in traditional Wankel engines, is in this case rather the combination of a rotary motion and a translatory one. Moving further on in a clockwise direction along said upper stator surface 33b, there can be found a second injector 23. Between said two injectors 39, 23 there can be provided an igniter plug or a heater plug 38. The positions and the number of said injectors and said spark plug may vary depending on the different embodiments. For example, if an anti-clockwise direction of rotation is selected for the rotor 31, the positions of the above-cited items relative to each other must of course be inverted.

In the lower stator surface 33c there is provided an intake port 60, with the related inflow conduit 60a, and an exhaust port 70, with the related outflow conduit 70a, an exhaust valve 14, as appropriately driven by a central electronic control unit (not shown in the Figures), being further provided in said outflow conduit 70a. In addition, in a position opposite to the primary combustion chamber 24, the lower stator surface 33c comprises another chamber 71, which is again necessarily provided owing to purely geometrical reasons in view of allowing for the combined rotary and translatory motion of the rotor 31 to take place within the stator 33.

For the geometrical indications given in connection with the sizing and the configuration of the stator 33 to be more clearly understood, reference should now be made to Fig.3b, in which the construction of the rotor 31, so as obtained in accordance with the description that has been set forth previously with reference to Fig.4b, has been partly illustrated.

In this connection, let the distance from a vertex of the triangle T2 and the vertex of the triangle T1 lying closest thereto be defined as M1. Let now a vertex of the triangle T2, i.e. a point corresponding to an upper cusp of the cavity 11 of the same rotor 31 in Fig.4a, be identified and defined as point P2. Let then a compass be set at this point P2 with a spread of the compass legs that is equal to the distance from this point P2 to one of the opposing vertices of the triangle T1, and let a first arc A2 be described (it will turn out as being an extension of a convex side of the rotor 31). Considering the circle CC in which the triangle T2 is inscribed, let now the point P2' be identified, which is the counterpart of the above-cited point P2 at an intersection of the circle CC with a height AA of the triangle T1. Let a compass be set at this point P2' with a spread of the compass legs that is equal to the distance from the point P2 to one of the two farthermost outer vertices of the first triangle T1. Let an arc A3 be described in this way, which intersects the triangle T1 and constitutes the second part of the inner stator surface. Next, the contour of the chambers 71, 24 is drawn out in the following manner. By setting a compass once at P2 and once at P2' with a spread of the compass legs that is equal to the afore-defined distance M1, two similar arcs A4 can be described, whose portion extending outside the arcs A2 and A3 forms the contour of the chambers 71 and 14, respectively.

Owing to the particular construction of the two circumference arcs A2 and A3, the above-mentioned arcs A4 therefore form two side sharp corners in the inner stator surface. These arcs are at this point joined with each other in the following manner. By using a compass with a spread M1 of its legs, the same is set on the horizontal axis of symmetry S1 of the stator 33, in the portion thereof comprised within the arcs A2, A3, so that the other tip of the compass is able to describe a tangent arc relative to the previously described arcs A2, A3. Let now an arc A7 be drawn out with such an amplitude as to enable it to reach the corresponding point on the opposite arc. This latter arc A7 represents the link joining the two arcs A2 and A3 with each other. This procedure must of course be repeated on both sides of the stator 33.

In Fig.3b, said arc A7 has been drawn in such a manner as to show it conspicuously. As a mere indication, an angle of approximately 40° may be considered sufficient for the joining arcs A7; in the practical construction, however, it will be necessary for the amplitude to be selected, which is not only the appropriate one so as ensure that a junction is obtained without any discontinuity in the curvature of the stator surface, but is also compatible with the actual manufacturing difficulties. In other words, no cusp shall be formed. It should be noticed that the axis X of the driving shaft 32, by its own construction, turns therefore out as being contained in the straight line passing through the intersection points of the arcs A3 and A4, i.e. the horizontal axis of symmetry S1 of the stator.

The three-lobe cavity 11, the second rotor 20 and the rotor 31/stator 33/male lobe 20a assembly are so sized as to ensure that:
- when the male lobe 20a, which protrudes relative to the driving shaft 32, is in the position that is diametrically opposed to an outer vertex of the rotor 31, said male lobe is perfectly and fully contained in the corresponding female lobe;
- the cusp of the three-lobe cavity 11 that is opposed to the above-mentioned female lobe is sealed against the surface of the second rotor 20;
- in the positions in which the male lobe 20a is not completely contained in a female lobe, the three cusps 13a, 13b and 13c of the three-lobe cavity 11 are always sealing against the surface of the second rotor 20;
- the rotor 31, the male lobe 20a and the stator chamber are sized in a substantially equal manner in the direction parallel to the axis X of the driving shaft 32. Particular sealing means, of a construction that is generally known as such in the art, are arranged along the perimeter of the rotor sides, where they provide for keeping the same rotor perfectly adhering against the inner surfaces of the stator.

The phases of operation of the engine according to the present invention are now illustrated with particular references to Figures 6 et seqq. in the following description, in which further peculiar aspects of the present invention will also become fully apparent.

In Fig.6, the driving shaft 32 is shown rotating in the same clockwise direction as the rotor 31; however, the latter rotates, by pivoting on the sealing means 15a, at a slower speed, to the point that it comes to stop for a very short period of time, before starting again to rotate in the clockwise direction. The male lobe 20a, as driven by the motion of the driving shaft 32, is at this point entering the female lobe 11b and draws, from the intake port 60, air-fuel mixture that flows into the chamber 12a and the female lobe 11a. At the same time, the mixture that is already available in the chamber 12b and the female lobe 11b from the preceding cycle, starts to be compressed by the female lobe 20a. In the opposite portion of the stator 33, inside the volume V2, there are to be found the exhaust gases of the preceding cycle, which cannot be exhausted yet, owing to them being blocked by the sealing means 15a upstream of the exhaust port 70.

In Fig.7, the rotor 31 is shown to have performed a light rotation about the sealing means 15a close to the exhaust port 70. In the meanwhile, the intake phase on the left side of the stator 33, there keeps going on the intake phase, so that the mixture starts at this point to also flow into the volume V1, which has in this way become available between stator 33 and rotor 31. The male lobe 20a is now within the female lobe 11b, so that the mixture contained in the chamber 12b is thereby further compressed. The rotor 31 is driven rotatably by the male lobe 20a and, by so displacing, sets the exhaust port 70 free, so that the exhaust gases starts to issue therethrough, and are exhausted through the conduits 70a, as pushed by the moving mass of the same rotor 31.

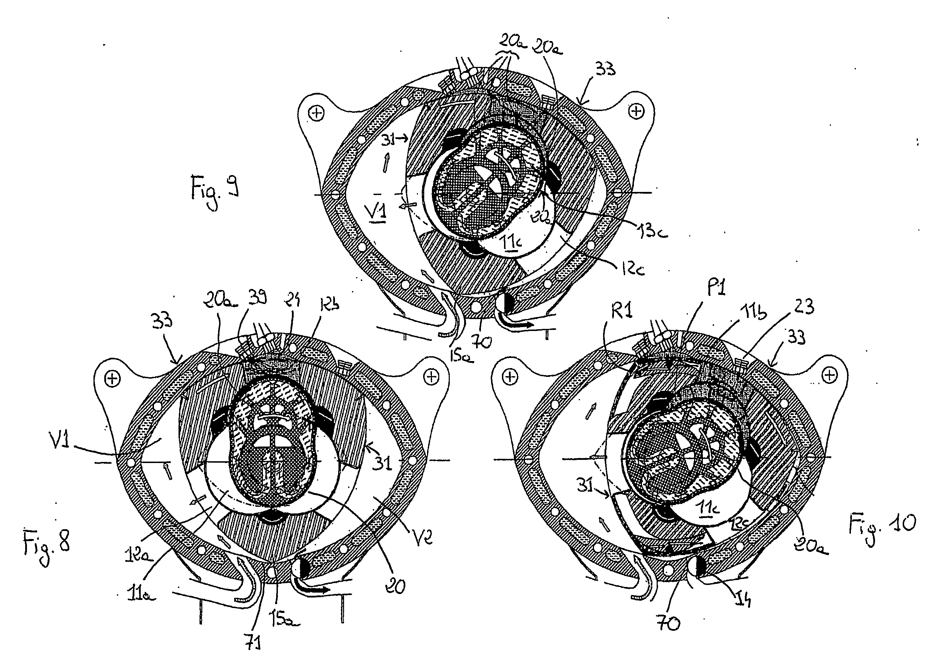

In Fig.8, the male lobe 20a is shown to be fully within the female lobe 11b, while the rotor 31 keeps being rotated further in the clockwise direction; this time, however, the sealing means 15a performs a translatory motion, so that it slides on the surface of the chamber 71 (the importance thereof is now fully apparent from the geometry of the stator 33). The mixture being present in the chamber 12b and the chamber 24, i.e. the volumes that are generally indicated at V3 on their whole, is compressed to its maximum extent. The starting or pilot jet has already occurred from the first injector 39, as driven by the central electronic control unit, so that combustion has begun and takes prevailingly place inside the chamber 12b. This starting jet is then followed by a pulse sequence of other main jets, in a manner known as such in the art, the pulse rate of which is adjusted by the electronic control unit according to the desired rotation speed. The volume V1, which jointly with the volume of the chamber 12a and the female lobe 11a contains the mixture to be ignited in the following cycle, is further increased on the left side of the stator 33. The volume V2, on the contrary, keeps decreasing with the result of causing a greater amount of spent gases to be exhausted.

One of the advantages of the particular rotor 31-second rotor 20 mechanism can now be fully appreciated. This resides in the fact that the combustion takes mainly place in the chamber 12b, whose shape is fully definable by the designer, owing to its being formed and provided directly in the rotor 31. As a result, this chamber is easily provided with such dimensional characteristics as required for optimal combustion, thereby eliminating the problem of the linguiform chamber of the traditional Wankel engine (it will be readily appreciated that this consideration applies to all of the three chambers 12a, 12b and 12c). In addition, the male lobe 20a, which is firmly joined to the driving shaft 32, is an integral part of the combustion chamber and behaves as the cylinder head in reciprocating-piston engines, thereby giving rise to a number of advantages as described further on.

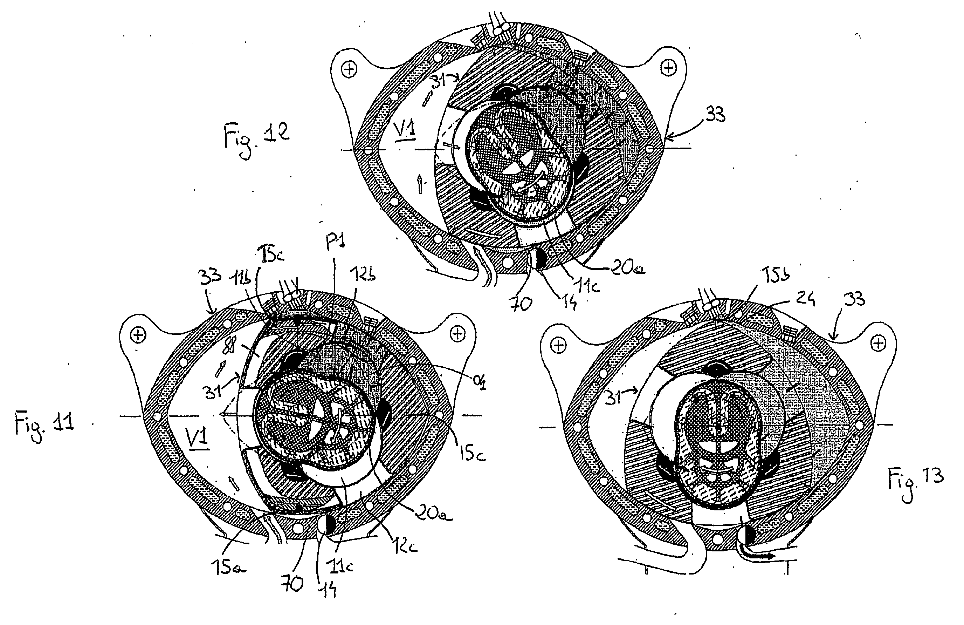

In Fig.9, the rotor 31, as pushed by the male lobe 20a across the sealing means 13c, is shown to have almost reached the right wall of the stator 33, while the male lobe 20a is driven out of the female lobe 11b by the pressure that the expanding gases in the chamber 12b exert upon the head thereof. On the left side of the stator 33, the volume V1 is completely filled with fresh mixture, whereas the exhaust gases being present on the right side occupy the female lobe 11c and the chamber 12c, while however keeping flowing out through the exhaust port 70. It should be noticed how the sealing means 15a has in the meanwhile moved practically along the whole surface of the chamber 71 in the clockwise direction, while the exhaust port 70 is being covered by the rotor 31 to an ever increasing extent, wherein the fact is stressed once again that the lobe 20a is an integral part of the combustion chamber.

Let us now more closely consider two basic aspects of the present invention. The fact that the pressure of the expanding gases exerts a force directly upon the male lobe 20a readily implies that the (average) arm, with which said force generates a torque on the driving shaft 32, is the one offered by the dimensions of the male lobe 20a itself, and this arm is certainly greater, for a same size of the rotor, as compared with the one of a traditional Wankel engine. This is due to the fact that, in the traditional Wankel engine, said arm coincides numerically with the eccentricity of the eccentric attached to the driving shaft. This feature, therefore, readily implies a greater torque and, hence, a greater power being imparted to the driving shaft, as compared with the traditional Wankel engine.

The second basic aspect of the present invention is the substantial constancy, in this phase, of said arm during the rotation of the male lobe 20a. When looking at Figures 8, 9, 10 and 11 it can be noticed that also the volume in which the combustion gases expand, i.e. the volume which is constituted by the sum of the volumes of the chamber 12b and the female lobe 11b, rotates in the clockwise direction, since it is so displaced by the motion of the rotor 31. Owing to the fact that even the male lobe 20a is in the meanwhile caused to rotate, the overall geometry of the system enables the expanding gases to vent off onto the surface of said male lobe 20a, thereby maintaining an average arm, with respect to the driving shaft 32, that is substantially constant in this phase. In other words, we can say that the present invention provides a kind of a rotating combustion and expansion chamber that "runs after", i.e. follows the male lobe 20a. This effect immediately translates into a torque that is imparted to the driving shaft 32 in a much smoother manner than in a traditional Wankel engine.

In Fig.10, the rotor 31 is shown to be almost completely resting against the right inner wall of the stator 33. The male lobe 20a, as pushed by the pressure of the expanding gases, is moving out of the female lobe 11b in view of successively entering the female lobe 11c. The exhaust port 70 is almost fully covered by the rotor 31 and obstructed by the action of the exhaust valve 14. As a result, the exhaust gases are now substantially entirely contained within the chamber 12c and the female lobe 11c, where they start to undergo compression as the male lobe 20a moves thereinto. The way in which such a compression is used to an advantage shall be explained further on.

In this particular case, on the contrary, a very important role is played by the operation of the second injector 23. In an engine according to the present invention having a rather modest size, the pressure inside the combustion chamber, as represented by the volume of the chamber 12b and the free volume of the female lobe 11b, is substantially constant in this phase. This is due to the small size of the combustion chamber itself, as well as to the fact that the combustion times are long enough to enable a uniform combustion to be obtained (it will be readily appreciated that these considerations apply regardless of which of the three sides of the rotor 31 is actually involved by the combustion). Then, in the case of small engine sizes, the pressure onto the wall of the female lobe 11b close to the sealing means 13b (the point indicated at P1 in Fig.10) is high enough to brake the rotor 31. Such a braking action is absolutely necessary in order to prevent the rotor 31 from knocking against the wall of the stator 33 (see the next Fig. 11) and, above all, against the rollers 27, in particular at the vertex indicated at R1 in Fig.10. This braking action does on the contrary not take place when the volume of the combustion chamber increases with the size of the engine. In this case, the pressure at the point P1 would in fact be too low for a braking action to be able to take place. Therefore, in view of averting the risk of a possibly occurring knocking, a second injection is used through the second injector 23. The purpose of such a provision is to obtain a second combustion and increase the pressure inside the combustion chamber, mainly at said point P1, in order to bring about said braking action on the rotor 31.

In Fig.11, the rotor 31 is shown to fully rest (via the sealing means 15a, 15b and 15c) against the inner wall of the stator 33, where it remains shortly at a standstill. This transient stop of the rotor, that forms a basic feature of the present invention, is not a drawback in this case. Actually, it has two advantages: it assists in reducing the vibrations of the entire engine body and, above all, makes it possible for energy from the gases expanding in the female lobe 11b and the chamber 12b to be recovered and transferred, via the male lobe 20a, to the driving shaft 32. In fact, the male lobe 20a is pushed by the pressure of the expanding gases in the female lobe 11b and the chamber 12b, i.e. a pressure that is much higher if said second combustion has occurred, and this pressure, now that the rotor is practically at a standstill, can only act, i.e. be exerted onto the male lobe 20a. In fact, as it keeps rotating, said lobe starts to invade the female lobe 11c. The exhaust port 70 is still fully obstructed by the rotor 31 and the valve 14, so that the exhaust gases, which are contained in the female lobe 11c and the chamber 12c, are subject to a strong compression by the lobe 20a and exert a great counter-pressure thereagainst. This particular effect is a major feature of the present invention. As a matter of fact, considering that the energy of the expanding gases is discharged abruptly onto the male lobe 20a, if there is no force acting in the counter-direction the driving shaft 32 would rotate jerkily. The counter-action opposed by the spent gases in the chamber 12c and the female lobe 11c is on the contrary effective in dampening the fluctuations in the torque being transmitted to the driving shaft 32 and alleviates the load onto the guides 88. Another reason that might make it appropriate for a second injection, and hence a second combustion, to be provided, lies in the fact that, when the rotor 31 is in the position shown in Fig.11, a kind of dead-centre condition might actually arise. In other words, the forces acting on the rotor 31 and the male lobe 20a are counterbalancing each other, thereby leading the same rotor and male lobe to stop permanently. The second injection provides the additional torque needed to overcome said dead-centre condition by imparting an acceleration to the male lobe 20a at said point P1.

It should be noticed that, since the combustion has begun, the driving shaft 32 has performed a useful rotation by an angle, as indicated at α₁ in Fig.11, of 105° up to this point. In this phase, the volume V1 has reached its maximum extension.

It is now possible for another advantage of the present invention to be highlighted. Defining as Vc the volume of any of the chambers 12a, 12b and 12c, if the compression ratio is calculated, i.e. the ratio (max(V1)+Vc)/min(V3), this ratio turns out to most easily be in excess of 20; it generally lies at 22 and, therefore, allows for a diesel-cycle operation to take place. The peculiar geometry of both the rotor 31 and the male lobe 20a enables a double intake to take place, thereby filling both the volume V1 and the volume Vc of the adjacent chamber, followed by a double compression brought about by the rotation of the rotor 31 and the rotation of the male lobe 20a. These combined effects are the reason behind the high compression ratio, and hence the high efficiency that can be reached.

In Fig.12, the male lobe 20a, as pushed by the pressure of the expanding gases, is shown to have completely entered the female lobe 11c. Initially, the male lobe 20a carries the rotor 31 with it, up to the point at which the latter has moved away from the wall of the stator 33 to a sufficient extent as to be able to be pushed itself by the pressure of the expanding gases. From this moment on, the male lobe 20a moves mainly under the driving force exerted by the rotor 31. The possibility is again given, thanks to the peculiar construction of the engine according to the present invention, for a further utilization of the energy contained in the expanding gases to be achieved. In this phase, it is namely the motion of the rotor 31 that allows for such an energy recovery to be achieved, since it offers a possibility for the gases to expand. The exhaust port 70 is now cleared and accessible due to the valve 14 having been opened following an appropriate electronic control signal. The phase in which the spent gases are finally exhausted can now be brought to completion. On the left side of the stator 33, a new compression phase of the mixture that has been taken in previously can therefore start in the volume V1.

In Figures 13, 14 and 15, the propulsive action of the expanding gases is shown to be ending, while a new cycle starts. The driving shaft 32 keeps being driven by the rotor 31, which moves along more than half the lower stator surface by describing, with the sealing means 15b, the contour of the chamber 24. The driving shaft 32 goes on the whole as far as completing a useful rotation, with respect to the position it had at the beginning of the combustion process (Fig.8), by an angle, as indicated at α₂ in Fig.15, of (at least) 240°. This fact represents a noticeable improvement over traditional Wankel engines and ensures a torque being transmitted onto the driving shaft 32 in a very smooth manner, thereby enabling much smaller flywheels to be attached to said driving shaft, which in turn means a reduction in overall costs, size and weight. The phase being described here is the last one in the thermodynamic cycle of the engine 1; this cycle is then repeated again by starting from the phase described in connection with Fig.1.

From the above description it can be inferred that, in the engine 1, to each rotation of the rotor there correspond three turns of the driving shaft 32, just as in a traditional Wankel motor.

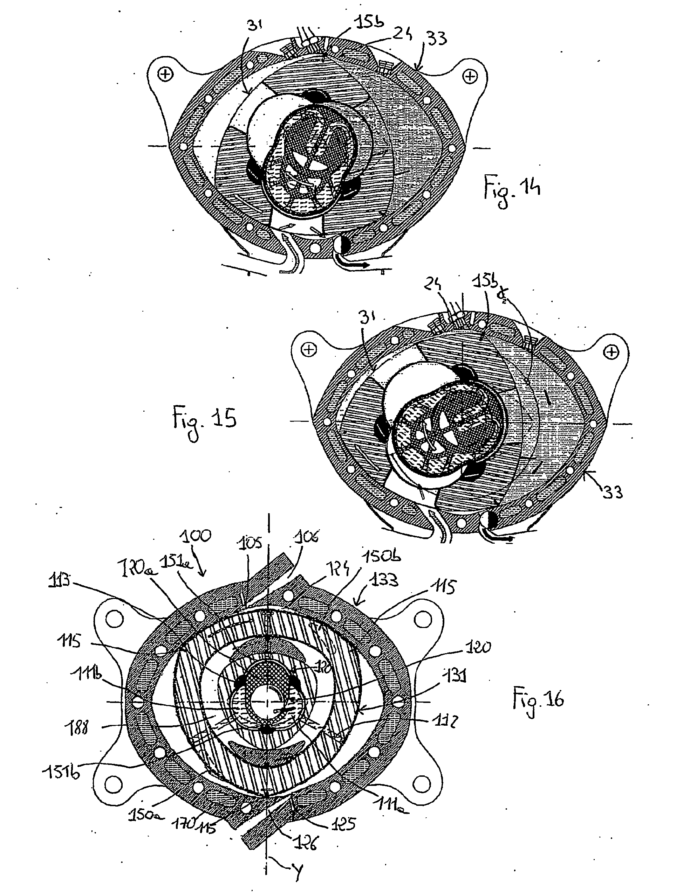

In Fig.16, the reference numeral 100 is used to indicate a cross-sectional view of a preferred embodiment of a compressor incorporating some of the features of the engine 1. This compressor 100 can be used in applications requiring high-pressure media to be circulated, a typical utilization being in closed-circuit cooling and/or air-conditioning systems for residential application. The medium used by the compressor 100, which shall be referred to simply and shortly as "medium" in the following description, is preferably the coolant R410A, being it anyway impossible for use to be made of liquids. The advantages offered by such compressor are a high efficiency, the quietness in operation, and a reduction in the vibrations being generated. These advantages are obtained owing to both the particular construction of the compressor, many of the considerations set forth above in connection with the engine 1 applying also in this case, and the particular manner in which a high pressure of the compressed medium is achieved. In fact, the main feature of this compressor lies in the use of a high-pressure oil jet being injected into a chamber containing the medium to be compressed. This jet of oil, due to the fact that oil is incompressible, has the effect of increasing the pressure in the medium. Another advantage lies in the absence of valves.

The construction of many mechanical parts of the compressor 100 is similar to the one of the corresponding parts of the afore-described engine 1. These mechanical parts are indicated with the prefix "1" added to the reference numerals of the corresponding parts of the engine 1, so as to keep a parallel connection; similar are in particular the stator 133 and the chambers 124, 170, the rotor 131 and the female lobes 111a, 111b and 111c, the second rotor 120 and the male lobe 120a, the driving shaft 132 (not shown) coupled to the male lobe 120a. In this case, the driving shaft 132 imparts the motion to the male lobe 120a, thereby supplying the energy required to operate the compressor 100. Again, the compressor 100 is provided with sealing means 115a, 115b, 115c and 113c, 113b, 113c, respectively, on the vertices of the rotor 131 and in correspondence of the cusps of the three-lobe cavity of the same rotor 131, the guides 188 along the perimeter of the two bases of the rotor 131 and related rollers (not shown in Fig.16) associated thereto, as well as sealing means on the sides of the rotor 131, which are similar to the sealing means provided in the rotor 31 of the engine 1. In the compressor 100, the guides 188 are oversized as compared with the ones used in the engine 1, in consideration of the far greater stresses which they are subject to.

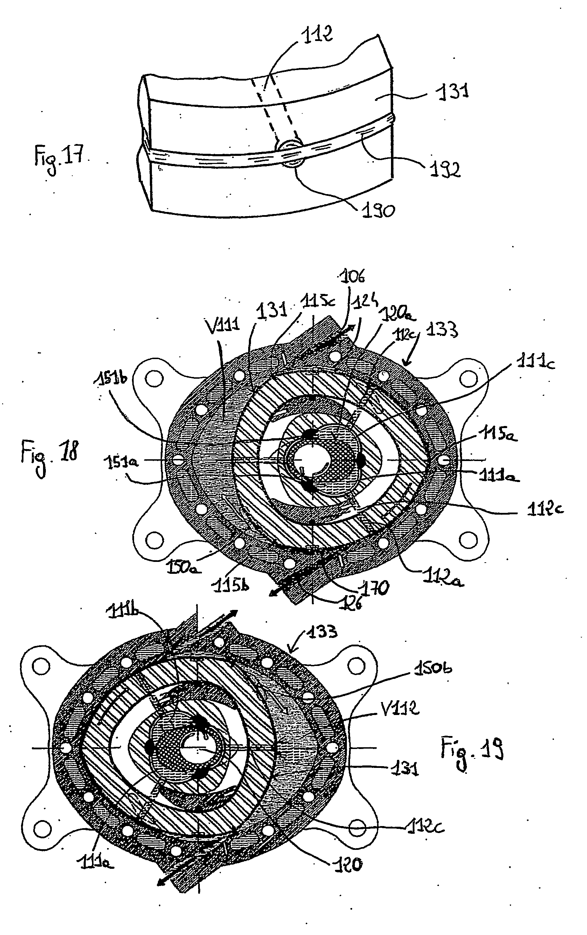

Anyway, the compressor 100 also shows some differences with respect to the construction of the engine 1. So, for example, no injector and/or plug is of course to be found on the inner stator surface. At an extremity of the chambers 124, 170 there are debouching two delivery ports 105, 125 and the related delivery conduits 106, 126, respectively. On the inner stator surface, in contact with a base of the rotor 131, there are provided two inlet ports 150a, 150b for letting in the medium to be compressed. Both the shape and the position of these ports may obviously be changed according to the variants in the embodiment of the compressor itself. In the rotor 131, instead of the chambers 12a, 12b and 12c described previously in connection with the engine 1, there are provided three conduits 112a, 112b and 112c that establish a communication between the outer contour of the rotor 131 itself and the female lobes 111a, 11b and 111c, respectively. These conduits terminate in a small hemispherical cavity provided on the sides of the rotor 131, this cavity being occupied by an equivalently sized half-sphere 190 (see Fig.17). Upon said half-sphere 190 there is sliding a cord 192, usually made of Teflon, placed in a groove (not shown) extending all over the three sides of the rotor 131 parallel to the edges of the same rotor. This cord, which is elastic, has the task of retaining the three half-spheres 190 inside the respective cavities, while anyway leaving them free to lift off and clear the outlet of the conduits 112 when required (this function shall anyway be explained in greater detail further on). In the stator surface being in contact with the bases of the rotor 131 there are provided two inlet ports 151a, 151b. These ports are located along the vertical axis of symmetry Y of the stator 133 at a distance from the axis of the driving shaft 132 that is equal to the radius of the two semi-circumferences forming the second rotor 120. As this will be better explained further on, these ports are opened or closed cyclically by the body of the second rotor 120 as it rotates above them. These ports 151a, 151b communicate with appropriate conduits (not shown in the Figures) connected to an oil reservoir (not shown) located outside of the stator casing.

The phases of operation of the compressor 100 will now be described for a delivery cycle of the same compressor. As far as this description is concerned, reference should be made to Figures 18 et seqq., in which the features of the present invention are specially illustrated.

In Fig.18, the inlet phase of the medium, which appears like a mist, is shown to start on the left side of the stator 133. The medium to be compressed flows in from the inlet port 150a, until it fills up the volume defined V111, which is comprised between a side of the rotor 131 and the inner surface of the stator 133. This inlet phase is only partially assisted by the motion of the rotor 131, owing to the fact that the medium, in these applications, flows spontaneously, i.e. by its own pressure, into the volume V111. The male lobe 120a is rotating in the clockwise direction and is moving into the female lobe 111a. From this moment on, the rotor 131, which was resting with its sealing means 115 against the right inner wall of the stator 133, is driven rotatably in the clockwise direction by the male lobe 120a. This rotary motion is accompanied by a translatory motion occurring in a parallel manner, whose characteristics are similar to the ones obtained in the engine 1. It should be noticed how, in this phase, the two sealing means 115b, 115c keep the volume V111 separated from the volumes contained in the chambers 124 and 170, which communicate with the delivery conduits 106, 126. As in the case of the engine 1, there are only sealing means separating the rotor 131 from the surface of the stator 133, a thin oil film being present therebetween, as this shall be explained in greater detail further on. The position of the second rotor 120 shown in the Fig.is such as to leave the inlet ports 151a, 151b fully dear, so that oil is filling the female lobes 111a, 111c and the related conduits 112 and 112c. However, the oil cannot escape from the rotor 131, since the half-spheres 190 are plugging said conduits, as pressed thereagainst by the cord 192 and the reaction of the inner stator surface. The task of the second rotor 120 is not confined to merely opening and closing the ports 151a, 151b cyclically; more than that, said second rotor behaves as an actual oil pump. In other words, the motion of this second rotor 120 is such as to take in oil from the interior of the female lobes 111a, 111b and 111c.

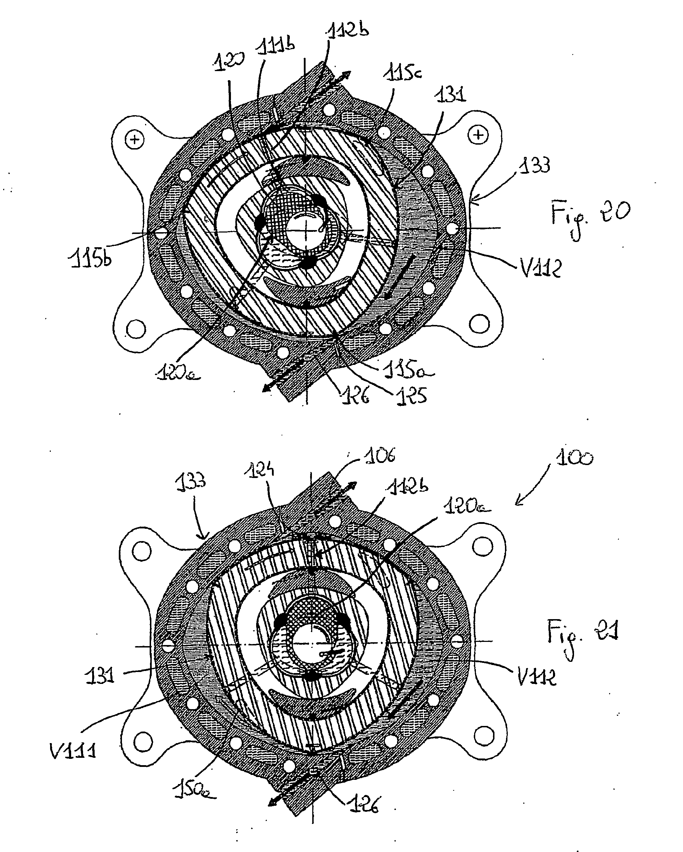

In Fig.19, the second rotor 120 is shown to have already completed almost half a revolution in the clockwise direction. The male lobe 120a has driven the rotor 131 all the way to the opposite side of the stator 133 and, while moving out of the female lobe 111a, is going to move into the female lobe 111b. The medium being present in the volume V111 has been compressed, thanks to the pressure generated by the rotor 131, to a compression ratio that, in this phase, can substantially be estimated as lying close to a factor 4 and is determined by the geometry of the mechanical parts involved. On the right side of the stator 133, inside the volume V112 (as defined in the same way as the volume V111), a new inlet phase starts with the medium flowing in through the inlet port 150b. It can be noticed that the combined rotary and translatory motion of the rotor 131 has caused the portion of the second rotor 120 that is attached to the driving shaft 132 to move completely into the female lobe 111c. This again causes the oil contained therein to be able to escape through the conduit 112c, owing to the fact that, at this point, the pressure exerted by the oil is sufficient to overcome the opposing force of the cord 192 and, as a result, to cause the half-sphere 190c to lift up. The addition of the oil to the medium in this phase is a technique that is generally known as such in the art, and it is used above all to keep up a correct lubrication and a proper sealing effect, as well as to cool down the medium flowing into the stator 133.

In Fig.20, the second rotor 120 is shown to have completed a further rotation in the clockwise direction, while carrying the rotor 131 rotatably with it, so that the same rotor 131 is now moving away from the wall of the stator 133. Actually, between the sides of the rotor 131 and the inner stator surface there is present an oil film, which is effective in improving the lubrication of the engine and the action of the sealing means 115. The male lobe 120a is now moving completely into the female lobe 111b, in which there is present oil that is thereby compressed to a quite noticeable extent. This compression is such as to cause oil to escape from the conduit 112b; however, the oil jet meets with a major impediment constituted by the inner stator surface which, in this phase, limits the extent to which the half-sphere 190b is able to move away from the outlet of the conduit 112b and, as a result, limits the flow rate of the oil. At the same time, the delivery phase of the medium towards the delivery conduits 126 starts in the volume V112 on the right side of the stator 133. It can in fact be noticed that the sealing means 115a has now shifted, thereby clearing the delivery port 125.

In Fig.21, the conduit 112b is shown to be now directly communicating with the chamber 124. The oil compressed by the male lobe 120a, which has now moved completely into the female lobe 112b, is finding now an easy escape route in the chamber 124. The pushing action exerted by the oil flowing into the chamber 124 has an effect on the medium present in the delivery chamber 106 in that it causes the pressure of the same medium to sensibly increase. This is a peculiar feature of the compressor 100, i.e. causing the pressure of the medium to increase through a jet of incompressible liquid into the delivery volume of said medium. It can be readily appreciated that, by varying the size of the female lobes and the conduits 112, it is possible for the oil percentage versus the medium percentage to be varied accordingly, depending on the requirements of the particular application. In the stator 133, on the right side thereof, the volume V112 is decreasing due to the action of the rotor 131, thereby continuing the delivery of the medium contained therein towards the conduit 126. On the left side of the stator 133, on the contrary, the rotor 131 is gradually clearing the inlet port 150a, thereby starting the phase of medium inlet into the volume V111.

It will be readily appreciated that a number of variations in the embodiment of the present invention are possible as compared to what has been described above, e.g. as far as dimensions, shapes or the use of mechanical equivalents are concerned, such as for instance by embodying the object of the present invention with a number of male lobes or female lobes differing from the aforenoted one, without departing from the scope of the invention as defined by the appended claims.

## Claims

1. Rotary machine, such as engine, compressor, pump or the like, comprising:
- a stator (33) having an inner cavity (11) with at least an intake port (60) and an exhaust port (70),
- a first rotor (31), arranged movably in said cavity, having
― at least two bases and at least a peripheral surface;
― **conduits (12), which connect at least two faces of said at least a peripheral surface;**
― a driving shaft (32) extending through said first rotor (31) coaxially therewith,
- **a second rotor (20) that Is firmly joined to said driving shaft (32) eccentrically,**
**characterized in that** said second rotor (20) comprises at least a lobe (20a) adapted to be received and accommodated in a complementary manner In a plurality of recesses (11a, 11b, 11c), In which said conduits (12) terminate.

2. Rotary machine, such as engine, compressor, pump or the like according to claim 1**, characterized in that** said first rotor (31) is a prism, whose bases are delta-shaped and whose cross-section orthogonally to the axis of rotation, in correspondence of said recesses (11a, 11b, 11c), is substantially defined as follows:
- let a first equilateral triangle (T1) be considered along with a second triangle (T2), in which said second triangle is contained in said first triangle with the barycentre thereof coinciding with the barycentre of the latter, as well as with the sides thereof extending parallel to the sides of said first triangle (T1),
- let circumference arcs (L1) be now drawn out between all of the vertices of said first triangle (T1) and externally thereto, with a radius corresponding to the distance to the farthermost vertex of the second triangle (T2),
- let a first, a second and a third semi-circumference (L2) be finally drawn out having the extremities thereof corresponding to the vertices of said second triangle (T2), and extending externally thereto, without said first, second and third semi-circumferences coming ever into contact with said circumference arcs (L1).

3. Rotary machine, such as engine, compressor, pump or the like according to claim 4 2, **characterized in that** the cross-section of said second rotor (20) is defined substantially as follows:
- considering one of said first, second or third semi-circumference (L1), let a fourth and a fifth similar semi-circumferences (Cf1, Cf2) be now drawn out, in such a manner that the diameters of said fourth and fifth semi-circumferences (Cf1, Cf2) may belong to a rectangle that does not intersect said same fourth and fifth semi-circumferences, and in such a manner that between a centre (C1, C2) of said fourth or said fifth semi-circumference and the outermost point on the other semi-circumference there is a distance (M2) corresponding to the height of the second triangle (T2),
- let the extremities of said fourth and fifth semi-circumferences (Cf1, Cf2) be now joined to each other through equal circumference arcs (Cf3) that have their centre on the axis (M) of the segment (SS) having the centres (C1, C2) of said fourth and fifth semi-circumferences as its extremities, and a radius equal to the height (M2) of the second triangle (T2), in such a manner that the convexity of said equal arcs (Cf3) is so oriented as to face said centres (C1, C2) of said fourth and fifth semi-circumferences (Cf1, Cf2), in which the axis of rotation (X) of said second rotor (20) passes through the centre of one of said fourth and fifth semi-circumferences.

4. Rotary machine, such as engine, compressor, pump or the like according to claim **3, characterized in that** the cross-section of the stator (33) is symmetrical and defined substantially as follows:
- let a first arc of a circumference (A2) be described with the centre thereof at a vertex (P2) of said second triangle (T2) and the radius thereof corresponding to the distance of said vertex (P2) of said second triangle (T2) to a farthermost vertex belonging to said first triangle (T1),
- considering the circle (CC), in which said second triangle (T2) is inscribed, let now the point (P2') be identified, at which said circle (CC) intersects the height (AA) of said first triangle (T1) passing through said vertex (P2) of said second triangle (T2),
- let a second arc (A3) be drawn out having its centre at said intersection point (P2') and a radius corresponding to the distance of said vertex (P2) of said second triangle (T2) to a farthermost vertex belonging to said first triangle (T1),
- let now a third and a fourth arc of a circumference (A4), equal to each other, be drawn out externally to said first triangle (T1), with the centres thereof situated at said vertex (P2) of said second triangle (T2) and said point of intersection (P2'), respectively, and with a radius corresponding to the distance (M1) of said vertex (P2) of said second triangle (T2) to the nearest vertex of said first triangle (T1), so that they intersect said first and said second arc (A2, A3),
- let finally a fifth and a sixth arc of a circumference (A7), equal to each other, be drawn out with the centre thereof on the segment (S1) having the intersections of said first and said second arc (A2, A3) with each other as its extremities, and with a radius corresponding to the distance (M1) of said vertex (P2) of said second triangle (T2) to the nearest vertex of said first triangle (T1), so that said fifth and said sixth arc of a circumference (A7) are tangent to said first and said second arc (A2, A3) at the extremities thereof.

5. Engine according to claim 4, **characterized in that** said conduits (12) inside said first rotor (31) are in the shape of a mixtilinear rectangle in their cross-section.

6. Engine according to claim 4, **characterized in that** said second rotor (20) comprises internal conduits (20b) for carrying cooling and lubrication media.

7. Engine according to claim 4, **characterized in that** between contiguous ones of said recesses (11a, 11b, 11c) of said first rotor (31) there are provided sealing means (13a, 13b, 13c).

8. Engine according to claim 4, **characterized in that** along the perimeter of the bases of said first rotor (31) there are provided guides (88) associated to rollers (27) that are attached to the stator (33) and dampened by elastic means.

9. Engine according to claim 8, **characterized in that** sealing means are provided along the border of said guides (88).

10. Engine according to claim 4, **characterized in that** sealing means are provided at the corners of the peripheral surface and along the perimeter of the bases of said rotor (31).

11. Engine according to claim 4, **characterized in that** at least an injector (39, 23) and/or at least a heater plug (38) and/or at least an igniter plug (38) are debouching at the surface of said inner cavity (11).

12. Engine according to claim 4, **characterized in that** a valve (14) is provided in the proximity of the at least one exhaust port (70).

13. Compressor according to claim 4, **characterized in that** in the inner cavity (111) of the stator (133) there is provided at least a lubricant inlet port (151a, 151b) situated at a distance from the axis of rotation of the second rotor (120) that is approximately equal to the radius of said fourth or fifth semi-circumference (Cf1, Cf2).

14. Compressor according to claim 4, **characterized in that** said at least a lubricant inlet port (151a, 151b) is provided along an axis of symmetry (Y) of the stator (133).

15. Compressor according to claim 4, **characterized in that** on said internal conduits (112a, 112b, 112c) in said first rotor (131) there are provided check valve means.

16. Compressor according to claim 15, **characterized in that** said check valve means comprise a half-sphere (190) housed in a cavity that is complementary to said half-sphere and provided at the outlet of said conduits (112a, 112b, 112c), in which said half-sphere (190) is retained by an elastic cord (192) surrounding the first rotor (131), and in which said cord is contained in a groove provided in the peripheral surface of said first rotor.

17. Compressor according to claim 4, **characterized in that** between the contiguous recesses (111a, 111b, 111c) of said first rotor (131) there are provided sealing means (113a, 113b, 113c).

18. Compressor according to any of the claims 1 to 4, **characterized in that** along the perimeter of the bases of said first rotor (131) there are provided guides (188) associated to rollers that are attached to the stator and dampened by elastic means.

19. Compressor according to claim 4, **characterized in that** sealing means are provided along the border of said guides (188).

20. Compressor according to claim 4, **characterized in that** sealing means (115a, 115b, 115c) are provided at the corners of the peripheral surface and along the perimeter of the bases of said first rotor.

21. Compressor according to claim 4, **characterized in that** at least an inlet port (150a, 150b) and a delivery port (105, 125) are debouching at the surface of the inner cavity of said stator (133) for the medium to be compressed.

## Patentansprüche

1. Rotationsmaschine wie ein Verbrennungsmotor, ein Kompressor, eine Pumpe oder dergleichen, aufweisend:
- einen Stator (33), der einen inneren Hohlraum (11) mit wenigstens einer Einlassöffnung (60) und einer Auslassöffnung (70) besitzt,
- einen ersten Rotor (31), der beweglich in dem Hohlraum angeordnet ist, der
- wenigstens zwei Basen und wenigstens eine Umfangsoberfläche besitzt;
- Kanäle (12), die wenigstens zwei Seiten der wenigstens einen Umfangsoberfläche verbinden;
- eine Antriebswelle (32), die sich durch den ersten Rotor (31) koaxial hierzu erstreckt,
- einen zweiten Rotor (20), der exzentrisch fest mit der An triebswelle (32) verbunden ist,
**dadurch gekennzeichnet, dass** der zweite Rotor (20) wenigstens eine Nocke (20a) aufweist, die dazu angepasst ist, in einer komplementären Art und Weise in einer Mehrzahl von Ausnehmungen (11a, 11b, 11c) aufgenommen und untergebracht zu werden, in denen die Kanäle (12) enden.

2. Rotationsmaschine wie ein Motor, ein Kompressor, eine Pumpe oder dergleichen gemäß Anspruch 1, **dadurch gekennzeichnet, dass** der erste Rotor (31) ein Prisma ist, dessen Basen deltaförmig sind und dessen Querschnitt orthogonal zur Drehachse in Entsprechung zu den Ausnehmungen (11a, 11b, 11c) im Wesentlichen wie folgt definiert wird:
- es wird ein erstes gleichseitiges Dreieck (T1) zusammen mit einem zweiten Dreieck (T2) in Erwägung gezogen, wobei das zweite Dreieck in dem ersten Dreieck enthalten ist, wobei der Massenmittelpunkt hiervon mit dem Massenmittelpunkt des letzteren zusammenfällt, ebenso wie sich die Seiten hiervon parallel zu den Seiten des ersten Dreiecks (T1) erstrecken,
- es werden nun Umfangsbögen (L1) gezogen, zwischen all den Scheitelpunkten des ersten Dreiecks (T1) und außerhalb hiervon, mit einem Radius, der dem Abstand zu dem am weitesten entfernten Scheitelpunkt des zweiten Dreiecks (T2) entspricht,
- schließlich wird eine erste, eine zweite und eine dritte Umfangshälfte (L2) gezogen, bei der die Endpunkte hiervon den Scheitelpunkten des zweiten Dreiecks (T2) entsprechen, und sich nach außen hiervon erstrecken, ohne dass die ersten, zweiten und dritten Umfangshälften jemals mit den Umfangsbögen (L1) in Kontakt gelangen.

3. Rotationsmaschine wie ein Verbrennungsmotor, ein Kompressor, eine Pumpe oder dergleichen gemäß Anspruch 2, **dadurch gekennzeichnet, dass** der Querschnitt des zweiten Rotors (20) im Wesentlichen wie folgt definiert wird;
- unter Berücksichtigung einer der ersten, zweiten oder dritten Umfangshälfte (L1) wird nun eine vierte und eine fünfte ähnliche Umfangshälfte (Cf1, Cf2) nun gezogen, in einer solchen Art und Weise, dass die Durchmesser der vierten und fünften Umfangshälften (Cf1, Cf2) zu einem Rechteck gehören, das sich nicht mit den vierten und fünften Umfangshälften schneidet, und in einer solchen Art und weise, dass ein Abstand (M2) zwischen einem Mittelpunkt (C1, C2) der vierten oder der fünften Umfangshälfte und dem äußersten Punkt auf der anderen Umfangshäl fte der Höhe des zweiten Dreiecks (T2) entspricht,
- wobei die Endpunkte der vierten und fünften Umfangshälften (Cf1, Cf2) nun durch gleiche Umfangsbögen (Cf3) miteinander verbunden werden, die ihre Mittelpunkte auf der Achse (M) des Segments (SS) haben, das wiederum die Mittelpunkte (C1, C2) der vierten und fünften Umfangshälfte als ihre Endpunkte hat, und einen Radius, der gleich der Höhe (M2) des zweiten Dreiecks (T2) ist, in einer solchen Art und Weise, dass die Konvexität der gleichen Bögen (Cf3) so ausgerichtet ist, dass sie den Mittelpunkten (C1, C2) der vierten und fünften Umfangshälften (Cf1, Cf2) gegenüberliegen, in denen die Drehachse (X) des zweiten Rotors (20) durch den Mittelpunkt von einem der vierten und fünften Umfangshälften geht.

4. Rotationsmaschine wie ein Verbrennungsmotor, ein Kompressor, eine Pumpe oder dergleichen gemäß Anspruch 3, **dadurch gekennzeichnet, dass** der Querschnitt des Statore (33) oymmet risch und im Wesentlichen wie folgt definiert ist:
- es soll ein erster Bogen eines Umfangs (A2) beschrieben werden, wobei sich dessen Mittelpunkt an einem Scheitelpunkt (P2) des zweiten Dreiecks (T2) befindet, und dessen Radius dem Abstand des Scheitelpunktes (P2) des zweiten Dreiecks (T2) bis zu einem am weitesten entfernt gelegenen Scheitelpunkt, der zu dem ersten Dreieck (T1) gehört, entspricht,
- unter Berücksichtigung des Kreises (CC), in den das zweite Dreieck (T2) eingeschrieben ist, soll nun der Punkt (P2') bestimmt werden, bei dem der Kreis (CC) die Höhe (AA) des ersten Dreiecks (T1) schneidet, bei der es durch den Scheitelpunkt (P2) des zweiten Dreiecks (T2) geht.,
- es wird ein zweiter Bogen (A3) gezogen, dessen Mittelpunkt sich am Schnittpunkt (P2') befindet und einen Radius hat, der dem Abstand des Scheitelpunktes (P2) des zweiten Dreiecks (T2) bis zum am weitest entfernt gelegenen Scheitelpunkt, der zu dem ersten Dreieck (T1) gehört, entspricht,
- wobei nun ein dritter und ein vierter Bogen eines Umfangs (A4), die gleich zueinander sind, außerhalb des ersten Dreiecks (T1) gezogen werden, wobei jeweils deren Mittelpunkte sich an dem Scheitelpunkt (P2) des zweiten Dreiecks (T2) und dem Schnittpunkt (P2') befinden, und mit einem Radius, der dem Abstand (M1) des Scheitelpunktes (P2) des zweiten Dreiecks (T2) bis zu dem am nächsten gelegenen Scheitelpunkt des ersten Dreiecke (T1) entspricht, so dass diese den ersten und den zweiten Bogen (A2, A3) schneiden,
- wobei schließlich ein fünfter und ein sechster Bogen eines Umfangs (A7), die gleich zueinander sind, gezogen werden, wobei deren Mittelpunkte auf dem Segment (S1) liegen, das die Schnitte des ersten und des zweiten Bogens (A2, A3) miteinander als dessen Endpunkte besitzt, und mit einem Radius, der dem Abstand (M1) des Scheitelpunktes (P2) des zweiten Dreiecks (T2) zu dem am nächsten gelegenen Scheitelpunkt des ersten Dreiecks (T1) entspricht, so dass der fünfte und der sechste Bogen eines Kreisumfangs (A7) an dessen Endpunkten tangential zu dem ersten und dem zweiten Bogen (A2, A3) liegen.

5. Verbrennungsmotor gemäß Anspruch 4, **dadurch gekennzeichnet, dass** die Kanäle (12) im Inneren des ersten Rotors (31) einen Querschnitt in der Gestalt eines mixtilincaren Rechtecks haben.

6. Verbrennungsmotor gemäß Anspruch 4, **dadurch gekennzeichnet, dass** der zweite Rotor (20) innere Kanäle (20b) zum Transportieren eines Kühlmediums und eines Schmiermittelmediums aufweist.

7. Verbrennungsmotor gemäß Anspruch 4, **dadurch gekennzeichnet, dass** zwischen den benachbarten Ausnehmungen (11a, 11b, 11c) des ersten Rotors (31) Dichtungsmittel (13a, 13b, 13c) vorgesehen sind.

8. Verbrennungsmotor gemäß Anspruch 4, **dadurch gekennzeichnet, dass** entlang der äußeren Begrenzung der Basen des ersten Rotors (31) Führungen (88) vorgesehen sind, die zu den Walzen (27) gehören, die an dem Stator (33) angebracht sind und die durch elastische Mittel gedämpft sind.

9. Verbrennungemotor gemäß Anspruch 8, **dadurch gekennzeichnet, dass** die Dichtungsmittel entlang der Grenze der Führungen (88) vorgesehen sind.

10. Verbrennungsmotor gemäß Anspruch 4, **dadurch gekennzeichnet, dass** die Dichtungsmittel an den Ecken der Umfangsoberfläche und entlang der äußeren Begrenzung der Dasen des Rotors (31) vorgesehen sind.

11. Verbrennungsmotor gemäß Anspruch 4, **dadurch gekennzeichnet, dass** wenigstens eine Einspritzvorrichtung (39, 23) und/oder wenigstens eine Glühkerze (38) und/oder wenigstens eine Zündkerze (38) an der Oberfläche des inneren Hohlraums (11) einmünden.

12. Verbrennungsmotor gemäß Anspruch 4, **dadurch** gekenn zeichnet, dass ein Ventil (14) in der Nähe von der wenigstens einen Auslassöffnung (70) vorgesehen ist.

13. Kompressor gemäß Anspruch 4, **dadurch gekennzeichnet, dass** in dem inneren Hohlraum (111) des Stators (133) wenigstens eine Schmiermitteleinlassöffnung (151a, 151b) vorgesehen ist, die in einem Abstand von der Drehachse des zweiten Rotors (120), der gleich dem Radius der vierten oder der fünften Umfangshälfte (Cf1, Cf2) ist, angeordnet ist.

14. Kompressor gemäß Anspruch 4, **dadurch gekennzeichnet, dass** die wenigstens eine Schmiermitteleinlassöffnung (151a, 151b) entlang einer Symmetrieachse (Y) des Stators (133) vorgesehen ist.

15. Kompressor gemäß Anspruch 4, **dadurch gekennzeichnet, dass** auf den inneren Kanälen (112a, 112b, 112c) in dem ersten Rotor (131) Rückschlagventile vorgesehen sind.

16. Kompressor gemäß Anspruch 15, **dadurch gekennzeichnet, dass** die Rückschlagventile eine Halbkugel (190) aufweisen, die in einem Hohlraum untergebracht ist, der komplementär zu der Halbkugel iot und an dem Aualass der Kanäle (112a, 112b, 112c) vorgesehen ist, wobei die Halbkugel (190) durch eine elastische Schnur (192) zurückgehalten wird, die den ersten Rotor (131) umgibt, und wobei die Schnur in einer Nut enthalten ist, die in der Umfangsoberfläche des ersten Rotors vorgesehen ist.

17. Kompressor gemäß Anspruch 4, **dadurch gekennzeichnet, dass** zwischen den benachbarten Ausnehmungen (111a, 111b, 111c) des ersten Rotors (131) Dichtungsmittel (113a, 113b, 113c) vorgesehen sind.

18. Kompressor gemäß einem der Ansprüche 1 bis 4, **dadurch gekennzeichnet, dass** entlang der äußeren Begrenzung der Basen des ersten Rotors (131) Führungen (188) vorgesehen sind, die zu den Walzen gehören, die an dem Stator befestigt sind und durch elastische Mittel gedämpft werden.

19. Kompressor gemäß Anspruch 4, **dadurch gekennzeichnet, dass** die Dichtungsmittel entlang der Grenze der Führungen. (188) vorgesehen sind.

20. Kompressor gemäß Anspruch 4, **dadurch gekennzeichnet, dass** die Dichtungsmittel (115a, 115b, 115c) an den Ecken der Umfangsoberfläche und entlang der äußeren Begrenzung der Basen des ersten Rotors vorgesehen sind.

21. Kompressor gemäß Anspruch 4, **dadurch gekennzeichnet, dass** wenigstens eine Einlassöffnung (150a, 150b) und eine Lieferöffnung (105, 125) an der Oberfläche des inneren Hohlraums des Stators (133) für das zu komprimierende Medium einmünden.

## Revendications

1. Machine tournante, telle qu'un moteur, un compresseur, une pompe ou similaire, comprenant :
- un stator (33) comportant une cavité interne (11) avec au moins un orifice d'admission (60) et un orifice d'échappement (70),
- un premier rotor (31), disposé mobile dans ladite cavité, comportant
-- au moins deux bases et au moins une surface périphérique ;
-- des conduits (12), qui raccordent au moins deux faces de ladite au moins une surface périphérique ;
-- un arbre de commande (32) s'étendant à travers ledit premier rotor (31) de façon coaxiale avec ce dernier,
- un second rotor (20) qui est fermement joint audit arbre de commande (32) de façon excentrique,
**caractérisée en ce que** ledit second rotor (20) comprend au moins un lobe (20a) adapté pour être reçu et logé de manière complémentaire dans une pluralité d'évidements (11a, 11b, 11c), dans lesquels lesdits conduits (12) se terminent.

2. Machine tournante, telle qu'un moteur, un compresseur, une pompe ou similaire selon la revendication 1, **caractérisée en ce que** ledit premier rotor (31) est un prisme, dont les bases présentent la forme d'un delta et dont la coupe orthogonalement à l'axe de rotation, en relation avec lesdits évidements (11a, 11b, 11c), est essentiellement définie comme suit :
- un premier triangle équilatéral (T1) étant considéré conjointement à un second triangle (T2), dans laquelle ledit second triangle est contenu dans ledit premier triangle, le centre de masse de celui-ci coïncidant avec le centre de masse de ce dernier, et les côtés de celui-ci s'étendant parallèlement aux côtés dudit premier triangle (T1),
- des arcs circonférentiels (L1) étant maintenant tracés entre tous les sommets dudit premier triangle (T1) et extérieurement à ce dernier, un rayon correspondant à la distance par rapport au sommet le plus éloigné du second triangle (T2),
- une première, une deuxième et une troisième semi-circonférences (L2) étant enfin tracées en faisant correspondre les extrémités de ces dernières aux sommets dudit second triangle (T2) ; et s'étendant extérieurement par rapport à ce dernier, sans que lesdites première, deuxième et troisième semi-circonférences n'entrent jamais en contact avec lesdits arcs circonférentiels (L1).

3. Machine tournante, telle qu'un moteur, un compresseur, une pompe ou similaire selon la revendication 2, **caractérisée en ce que** la coupe dudit second rotor (20) est définie essentiellement comme suit :
- si l'on considère l'une desdites première, deuxième ou troisième semi-circonférences (L1), une quatrième et une cinquième semi-circonférences (Cf1, Cf2) similaires étant maintenant tracées, de telle manière que les diamètres desdites quatrième et cinquième semi-circonférences (Cf1, Cf2) puissent appartenir à un rectangle qui ne croise pas lesdites mêmes quatrième et cinquième semi-circonférences, et de telle manière que, entre un centre (C1, C2) de ladite quatrième ou de ladite cinquième semi-circonférences et le point le plus extérieur sur l'autre semi-circonférence, il y ait une distance (M2) correspondant à la hauteur du second triangle (T2),
- les extrémités desdites quatrième et cinquième semi-circonférences (Cf1, Cf2) étant maintenant reliées les unes aux autres via des arcs circonférentiels égaux (Cf3) dont les centres se situent sur l'axe (M) du segment (SS) ayant les centres (C1, C2) desdites quatrième et cinquième semi-circonférences comme extrémités, et ayant un rayon égal à la hauteur (M2) du second triangle (T2), de telle manière que la convexité desdits arcs égaux (Cf3) soit orientée de façon à faire face auxdits centres (C1, C2) desdites quatrième et cinquième semi-circonférences (Cf1, Cf2), dans lesquels l'axe de rotation (X) dudit second rotor (20) passe à travers le centre de l'une desdites quatrième et cinquième semi-circonférences.

4. Machine tournante, telle qu'un moteur, un compresseur, une pompe ou similaire selon la revendication 3, **caractérisée en ce que** la coupe du stator (33) est symétrique et définie essentiellement comme suit :
- un premier arc circonférentiel (A2) étant décrit, le centre de ce dernier se trouvant au niveau d'un sommet (P2) dudit second triangle (T2) et le rayon de ce dernier correspondant à la distance dudit sommet (P2) dudit second triangle (T2) jusqu'au sommet le plus éloigné appartenant audit premier triangle (T1),
- si l'on considère un cercle (CC), dans lequel ledit second triangle (T2) est inscrit, le point (P2') étant maintenant identifié, au niveau duquel ledit cercle (CC) croise la hauteur (AA) dudit premier triangle (T1) en passant à travers ledit sommet (P2) dudit second triangle (T2),
- un deuxième arc (A3) étant tracé en ayant son centre au niveau dudit point d'intersection (P2') et un rayon correspondant à la distance dudit sommet (P2) dudit second triangle (T2) jusqu'au sommet le plus éloigné appartenant audit premier triangle (T1),
- un troisième et un quatrième arcs circonférentiels (A4), égaux l'un à l'autre, étant tracés extérieurement jusqu'audit premier triangle (T1), les centres de ces derniers étant situés au niveau dudit sommet (P2) dudit second triangle (T2) et dudit point d'intersection (P2'), respectivement, et un rayon correspondant à la distance (M1) dudit sommet (P2) dudit second triangle (T2) jusqu'au sommet le plus proche dudit premier triangle (T1), de sorte qu'ils croisent lesdits premier et deuxième arcs (A2, A3),
- enfin un cinquième et un sixième arcs circonférentiels (A7), égaux l'un à l'autre, étant tracés avec le centre de ces derniers sur le segment (S1) ayant les intersections desdits premier et deuxième arcs circonférentiels (A2, A3) l'un et l'autre comme extrémités, et avec un rayon correspondant à la distance (M1) dudit sommet (P2) dudit second triangle (T2) jusqu'au sommet le plus proche dudit premier triangle (T1), de sorte que lesdits cinquième et sixième arcs circonférentiels (A7) soient tangents par rapport auxdits premier et deuxième arcs (A2, A3) au niveau des extrémités de ces derniers.

5. Moteur selon la revendication 4, **caractérisé en ce que** lesdits conduits (12) à l'intérieur dudit premier rotor (31) présentent la forme d'un rectangle mixtiligne dans leur coupe transversale.

6. Moteur selon la revendication 4, **caractérisé en ce que** ledit second rotor (20) comprend des conduits internes (20b) destinés à porter des supports de refroidissement et de lubrification.

7. Moteur selon la revendication 4, **caractérisé en ce que**, entre les évidements contigus desdits évidements (11a, 11b, 11c) dudit premier rotor (31), sont prévus des moyens d'étanchéité (13a, 13b, 13c).

8. Moteur selon la revendication 4, **caractérisé en ce que** le long du périmètre des bases dudit premier rotor (31), sont prévus des guides (88) associés à des rouleaux (27) qui sont fixés sur le stator (33) et amortis par des moyens élastiques.

9. Moteur selon la revendication 8, **caractérisé en ce que** des moyens d'étanchéité sont prévus le long de la limite desdits guides (88).

10. Moteur selon la revendication 4, **caractérisé en ce que** des moyens d'étanchéité sont prévus au niveau des coins de la surface périphérique et le long du périmètre des bases dudit rotor (31).

11. Moteur selon la revendication 4, **caractérisé en ce que** au moins un injecteur (39, 23) et/ou au moins une bougie de départ (38) et/ou au moins une bougie d'allumage (38) débouchent à la surface de ladite cavité interne (11).

12. Moteur selon la revendication 4, **caractérisé en ce qu'**une soupape (14) est prévue à proximité du au moins un orifice d'échappement (70).

13. Compresseur selon la revendication 4, **caractérisé en ce que** dans la cavité interne (111) du stator (133), est prévu au moins un orifice d'entrée de lubrifiant (151a, 151b) situé à une distance partant de l'axe de rotation du second rotor (120) qui est approximativement égale au rayon de ladite quatrième ou cinquième semi-circonférence (Cf1, Cf2).

14. Compresseur selon la revendication 4, **caractérisé en ce que** ledit au moins un orifice d'entrée de lubrifiant (151a, 151b) est prévu le long d'un axe de symétrie (Y) du stator (133).

15. Compresseur selon la revendication 4, **caractérisé en ce que** sur lesdits conduits internes (112a, 112b, 112c) dans ledit premier rotor (131) sont prévus des moyens de clapet anti-retour.

16. Compresseur selon la revendication 15, **caractérisé en ce que** lesdits moyens de clapet anti-retour comprennent une demi-sphère (190) logée dans une cavité qui est complémentaire à ladite demi-sphère et prévue à l'orifice de sortie desdits conduits (112a, 112b, 112c), dans lequel ladite demi-sphère (190) est retenue par une corde élastique (192) entourant le premier rotor (131), et dans lequel ladite corde est contenue dans une rainure prévue dans la surface périphérique dudit premier rotor.

17. Compresseur selon la revendication 4, **caractérisé en ce que**, entre les évidements contigus (111a, 11b, 111c) dudit premier rotor (131), sont prévus des moyens d'étanchéité (113a, 113b, 113c).

18. Compresseur selon l'une quelconque des revendications 1 à 4, **caractérisé en ce que** le long du périmètre des bases dudit premier rotor (131), sont prévus des guides (188) associés à des rouleaux qui sont fixés au stator et amortis par des moyens élastiques.

19. Compresseur selon la revendication 4, **caractérisé en ce que** des moyens d'étanchéité sont prévus le long de la limite des guides (188).

20. Compresseur selon la revendication 4, **caractérisé en ce que** des moyens d'étanchéité (115a, 115b, 115c) sont prévus au niveau des coins de la surface périphérique et le long du périmètre des bases dudit premier rotor.

21. Compresseur selon la revendication 4, **caractérisé en ce que** au moins un orifice d'entrée (150a, 150b) et un orifice de refoulement (105, 125) débouchent à la surface de la cavité interne dudit stator(133) pour le support à compresser.
